# EUROPEAN PATENT SPECIFICATION

(11) **EP 3 501 333 B1**
(45) Date of publication and mention of the grant of the patent: **24.06.2020**
(21) Application number: 17208874.2
(22) Date of filing: 20.12.2017
(51) Int. Cl.: A46B 9/04, A46B 5/02, A46B 17/02, A46B 5/00

(54) **ORAL CARE IMPLEMENT**
ZAHNBÜRSTE
BROSSE À DENTS

(43) Date of publication of application: 26.06.2019
(73) Proprietor: The Gillette Company LLC, Boston, MA 02127 (US)
(72) Inventor: Jungnickel, Uwe, 61476 Kronberg (DE)
(74) Representative: P&G Patent Germany

(56) References cited:
- WO-A2-2008/098107
- US-A- 5 956 796
- US-A1- 2009 089 950
- US-A1- 2014 137 349
- US-A1- 2015 034 858

## Description

### FIELD OF THE INVENTION

The present disclosure is concerned with an oral care implement comprising a head and a handle, wherein the head and the handle are made from materials having different densities. The present disclosure is further concerned with a method for manufacturing such oral care implement, and a kit comprising such oral care implement and a holder for holding the implement.

### BACKGROUND OF THE INVENTION

Heads and handles for oral care implements, like manual toothbrushes, are well known in the art. Generally, tufts of bristles for cleaning teeth are attached to a bristle carrier or mounting surface of the brush head intended for insertion into a user's oral cavity. The handle is usually attached to the head, which handle is held by a user during brushing. Usually, manual toothbrushes are made of relatively light materials, e.g. polypropylene, optionally in combination with thermoplastic elastomers. Typically, these thermoplastic elastomers form gripping members on the handle of the toothbrush, e.g. a thumb rest improving gripping properties. However, due to the lightweight handle, the center of gravity of such manual toothbrushes is relatively close the toothbrush head, in particular when the head is loaded with toothpaste. If the center of gravity is relatively close to the toothbrush head, the toothbrush gets head loaded and can easily tip over once toothpaste is applied onto the brush head. Toothpaste may soil the surface onto which the brush has been placed. To prevent the loaded toothbrush from tipping over, additional geometrical structures, like roll stops/support structures are necessary. Toothbrushes are known having such structures in the form of edges attached to the head. However, such additional edges are uncomfortable in the mouth during brushing.

Further, brushes comprising relatively light handles, in particular handles being made of common plastic materials, e.g. polypropylene, provide low product quality perception during use of the brushes.

Additionally, in order to clean teeth effectively, appropriate maneuverability and good handling properties of the overall toothbrush have to be provided, which properties, inter alia, depend on the bending stiffness of the handle and the brush head. Usually handles of toothbrushes have the shape of a linear rod to be handled and manipulated by a user as needed. It has been seen in the past that manual toothbrushes with lightweight handles, e.g. made of polypropylene, are neither comfortable to handle nor easy to maneuver in the oral care cavity. Further, bending stiffness of such handles is relatively low. They tend to flex away easily and the relatively low bending stiffness results in reduced plaque removal efficiency on teeth surfaces. Further, such handles provide poor maneuverability in the mouth during brushing. In order to compensate said low bending stiffness, the size of the cross-sectional area of the handle could be increased. However, relatively thick handles may also reduce ease of rotating the brush in the hand, thus, impeding the user reaching all areas in the oral cavity. Consequently, maneuverability of the overall brush is not sufficient. However, in order to achieve and preserve good oral health, and to prevent gingivitis, it is important to clean teeth and gums thoroughly, in particular in hard to reach areas, e. g. in the region of the back molars. Further, gaps between teeth and periodontium, the so called gingival groove has to be thoroughly cleaned which requires a good and well-coordinated brushing technique, which may not be achievable by using the above-mentioned manual toothbrushes. Further, it is known that users/consumers use different brushing techniques, and, therefore, it is critical to identify optimal ergonomics of a toothbrush in order to provide good sensory feeling during brushing when using all types of brushing techniques.

US 2009089950 discloses an oral care implement or toothbrush including a head and a tooth cleaning element. The oral care implement's mass centroid may be adjusted to guard against the application of excessive force against a user's teeth. Adjustment may be performed using a variety of systems and mechanisms including adjustment of a weight within a portion of the oral care implement. The location of the weight may be modified using a variety of techniques including a screw configuration and/or a slider control.

It is an object of the present disclosure to provide an oral care implement which overcomes at least one of the above-mentioned drawbacks, in particular an oral care implement which does not tip over when loaded with toothpaste and placed on a substantially planar surface. Further, the oral care implement shall provide more comfort and improved quality perception as well as better maneuverability in the oral care cavity during brushing. It is also an object of the present disclosure to provide a method for manufacturing such oral care implement.

### SUMMARY OF THE INVENTION

The invention is defined in claims 1 and 10. Preferred embodiments are defined in the dependent claims.

In accordance with one aspect an oral care implement is provided, the oral care implement having an overall length extension extending between a proximal end and a distal end, the distal end being opposite the proximal end, the oral care implement comprising a head at the proximal end and a handle, the handle being at least partially made from a material having a density being higher than the density of the material of the head, the oral care implement having a center of gravity located at a distance measured from the distal end, wherein the ratio of said distance to the overall length extension of the oral care implement is from about 0.30 to about 0.45, preferably from about 0.35 to about 0.42, further preferably from about 0.38 to about 0.41, wherein the material of the handle comprises a magnetic and/or ferromagnetic material comprising from about 13 weight percent to about 30 weight percent of an amorphous thermoplastic resin; from about 3 weight percent to about 25 weight percent of aluminium oxide, boron nitride or aluminium silicate; and from about 45 weight percent to about 67 weight percent of iron oxide.

In accordance with one aspect a kit is provided, the kit comprising such oral care implement and a holder for attaching and holding the oral care implement.

In accordance with one aspect, a method for manufacturing such oral care implement is provided, the method comprising the following steps:
- providing an amorphous thermoplastic resin,
- providing aluminum oxide, boron nitride or aluminum silicate,
- providing iron oxide,
- mixing the amorphous thermoplastic resin, aluminum oxide, boron nitride or aluminum silicate and iron oxide into a magnetic and/or ferromagnetic molding material,
- heating the molding material mixture into a flowable molding material,
- molding the flowable molding mixture into a handle or part of a handle,
- providing a non-magnetic and/or non-ferromagnetic material, and
- molding the non-magnetic and/or non-ferromagnetic material into a head or part of a head, wherein the amorphous thermoplastic resin is provided in a range from about 13 weight percent to about 30 weight percent, the aluminium oxide, boron nitride or aluminium silicate is provided in a range from about 3 weight percent to about 25 weight percent and the iron oxide is provided in a range from about 45 weight percent to about 67 weight percent.

### BRIEF DESCRIPTION OF THE DRAWINGS

The invention is described in more detail below with reference to various embodiments and figures, wherein:
Fig. 1 shows a perspective view of an example embodiment of an oral care implement according to the present disclosure, wherein the head of the oral care implement is detached from the handle;
Fig. 2 shows a perspective view of an example embodiment of a kit comprising the oral care implement of Fig. 1, and a magnetic holder at which the oral care implement is magnetically attached;
Fig. 3 shows a diagram of a flow chart for molding the handle of the oral care implement according to the present disclosure;
Fig. 4 shows five basic grip styles how users hold a toothbrush during brushing;
Fig. 5 shows two example embodiments of oral care implements according to the present disclosure and one oral care implement according to the state of the art, the oral care implements comprising different handle materials;
Fig. 6 shows the oral care implements of Fig. 5 with toothpaste applied onto the brush head;
Fig. 7 shows a comparison of one of the example embodiment of Figs. 5 and 6, and of the oral care implement according to the state of the art of Figs. 5 and 6;
Fig. 8 shows a top view of an oral care implement according to the state of the art;
Fig. 9 shows a side view of the oral care implement of Fig. 8; and
Fig. 10 shows a side view of an example embodiment of an oral care implement according to the present disclosure.

### DETAILED DESCRIPTION OF THE INVENTION

The oral care implement according to the present disclosure comprises a handle and a head on which at least one tooth cleaning element, e.g. a tuft of bristles and/or an elastomeric element, may be fixed. The head may be repeatedly attachable to and detachable from the handle. Alternatively, the head may be permanently attached to the handle. The oral care implement may be a manual toothbrush. The oral care implement may also be an inter-proximal pick, a plaque scraper or tissue/tongue cleanser.

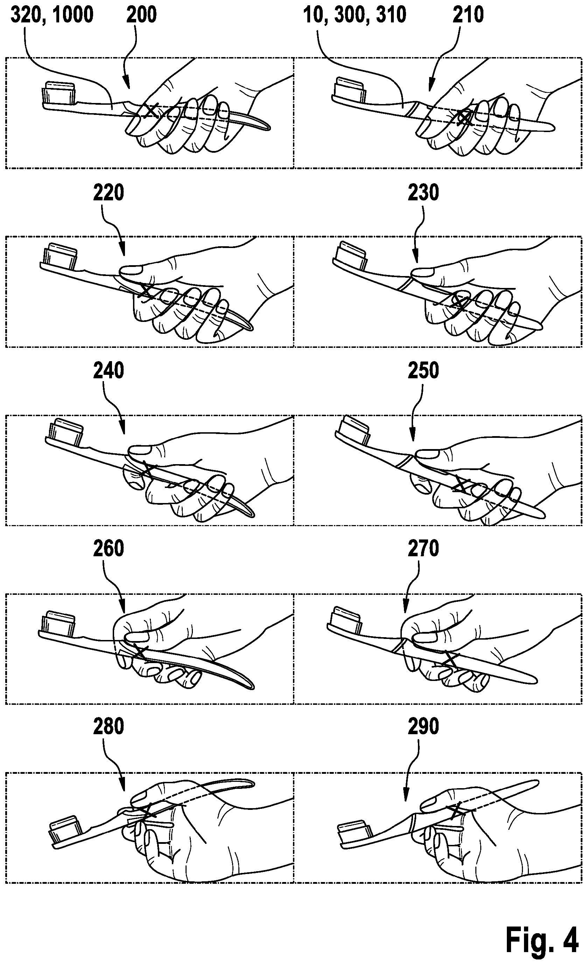

The oral care implement has an overall length extension extending between a proximal end, i.e. the end where the head is located, and a distal end. The center of gravity of the oral care implement is located at a distance measured from the distal end of the oral care implement. The ratio of said distance to the overall length extension of the oral care implement is from about 0.30 to about 0.45, or from about 0.35 to about 0.42, or from about 0.38 to about 0.41. Such ratio provides an oral care implement having the center of gravity closer to the center of the length extension of the handle, as compared to toothbrushes according to the state of the art. Consequently, when the user holds the oral care implement in his hand during brushing, the center of gravity is closer to the pivot point of the wrist joint enabling better control of the oral care implement in the mouth, thereby allowing more precise and accurate brushing movements. In other words, the center of gravity lies within the handle (even if the brush head is loaded with toothpaste), thereby enabling users to perform a well-coordinated brushing technique with improved sensory feeling during brushing. The center of gravity positioned substantially in the center of the handle renders the oral care implement balanced. The oral care implement does not easily tip over / does not get head loaded once toothpaste is applied onto the brush head. When applying the different brushing techniques as shown in Fig. 4, the toothbrush according to the present disclosure has the advantage that the center of gravity is in or very close to the pivot point of the wrist joint, thereby enabling better cleaning. Handling properties of the oral care implement are significantly improved.

The overall length extension of the oral care implement may be from about 180 mm to about 220 mm, or about 200 mm. The length extension of the handle may be 2/3 of the overall length extension of the oral care implement.

The oral care implement has a front side and a back side, the back side being opposite the front side. The front side is defined as the side from which the at least one tooth cleaning element extends. The handle has a cross sectional area which extends substantially perpendicular to the overall length extension of the oral care implement. The height extension of the cross-sectional area is defined as the maximum extension between the front side and the back side of the oral care implement.

The center of gravity of the oral care implement may be located at a position which is closer to the back side than to the front side of the oral care implement, the position being measured along the height extension of the cross-sectional area of the handle. If the oral care implement is loaded with toothpaste and placed on a substantially planar/flat surface, the center of gravity is below the axis of rotation which renders the overall oral care implement stable and balanced. The oral care implement returns automatically to an upright position (i.e. into a position which keeps the toothpaste away from/opposite to the surface) once the oral care implement is moved out of the balanced position.

The handle of the oral care implement is at least partially made from a material having a higher density than the density of the material from which the head - optionally including the shaft/neck - is made. At least a portion of the head, e g. the neck/shaft and the bristle carrier may be made from a material having a density from about 0.5 g/cm³ to about 1.2 g/cm³, or from about 0.7 g/cm³ to about 1.0 g/cm³, or about 0.9 g/cm³. For example, the head and the neck may be injection molded from a thermoplastic polymer, e.g. polypropylene having a density of about 0.9 g/cm³. In contrast to the head, the handle is at least partially made from a material having a significant higher density, e.g. a density from about 2.1 g/cm³ to about 3.1 g/cm³, or from about 2.3 g/cm³ to about 2.8 g/cm³, or from about 2.5 g/cm³ to about 2.7 g/cm³.

Usually, users are accustomed that products, in particular in the personal health care sector, have a specific weight that guarantees high product quality and provides comfortable feeling during use of the product. As the weight of the handle material is relatively high, the oral care implement according to the present disclosure provides such high-quality perception and comfortable feeling during use. The oral care implement according to the present disclosure provides superior product quality perception.

An oral care implement comprising a head being repeatedly attachable to and detachable from the handle provides several benefits: While the high quality and relatively expensive handle of the oral care implement is adapted for use over a longer period of time as compared to common manual toothbrushes which are discarded after about three months of use, the relatively cheap brush refill can be exchanged on a regular basis, e.g. after about three months. This provides a cost-efficient and environmentally sustainable high quality oral care implement with improved handling properties. The head of the oral care implement may be attachable to the handle via a snap-fit locking mechanism. For example, the handle may comprise a connector which may be insertable into a hollow portion in the head, or the head may comprise a connector inserable into a hollow portion in the handle. Alternatively, a connector may be provided as a further, i.e. separate part of the oral care implement. Such connector may be insertable into a hollow portion in the handle and into a hollow portion the head, respectively, thereby providing a sufficiently strong connection and sufficient stability between the head and the handle to enable a user to perform a brushing action.

In the past, it has been seen that after use of the brush/after brushing the teeth the user usually stores the wet brush in a toothbrush beaker for drying. However, in a classical toothbrush beaker, drained fluids get collected and accumulated at the bottom of the beaker, and the fluids stay in contact with the toothbrush for a longer period of time. Since the beaker is open on one side only, the toothbrush dries relatively slowly. Bacteria living in wet conditions/in a wet environment can grow quickly, contaminate the toothbrush and finally render the brush unhygienic. Consequently, there exists a need for a solution for hygienically storing and drying a manual toothbrush, thereby enabling remaining water, toothpaste slurry and saliva to drain off from the brush. The brush shall dry quickly thereby inhibiting bacterial growth.

The material of the head may be made from a non-magnetic or non-ferromagnetic material, while the material of the handle comprises a magnetic and/or ferromagnetic material. Magnetic/ferromagnetic material possesses not only a relatively high density, and, thus, a relatively heavy weight, which provides the oral care implement with the above-mentioned benefits, but the magnetic/ferromagnetic material also makes the oral care implement magnetically attachable to a magnetic holder. The magnetic/ferromagnetic material of the handle may allow for hygienic storage of the oral care implement. If the oral care implement is magnetically attached to a magnetic holder, remaining water, toothpaste slurry and saliva can drain off from the brush. The oral care implement can dry relatively quickly. Consequently, bacteria growth can significantly be reduced, thereby rendering the oral care implement more hygienic. In contrast to a common toothbrush being stored in a toothbrush beaker where drained fluids get collected and accumulated at the bottom of the beaker, the brush according to the present disclosure is exposed to wet conditions over a significantly shorter period of time.

For example, the magnetic holder may have the form of a flat disk attachable to a wall. Such flat disk may represent an easy to clean surface. Further, a user just needs to bring the oral care implement in close proximity to the magnetic holder, and then the oral care implement gets attached automatically. No precise positioning or threading as with common toothbrush holders is required. Since the magnetic properties are merely provided in the handle, and not in the head, the head portion cannot accidentally be attached to the magnetic holder, thereby reducing the risk that the magnetic holder gets soiled.

The magnetic and/or ferromagnetic material forming at least a part of the handle comprises an amorphous thermoplastic resin. The magnetic and/or ferromagnetic material further comprises aluminium oxide, boron nitride or aluminum silicate. Furthermore, the magnetic and/or ferromagnetic material comprises in addition iron oxide. The magnetic and/or ferromagnetic material may further comprise glass fibers which may be pre-mixed with at least a portion of the amorphous thermoplastic resin. Such handle material allows for control of the weight of the handle in whatever location, e.g. by filler variation. Control of the overall toothbrush is required due to the relatively high weight of the handle. It is now possible to use the mass/weight distribution of the material for adaption of the inertial moment of the finished toothbrush.

The magnetic and/or ferromagnetic material comprises from about 13 weight percent to about 30 weight percent of an amorphous thermoplastic resin; from about 3 weight percent to about 25 weight percent of aluminum oxide, boron nitride or aluminum silicate; and from about 45 weight percent to about 67 weight percent of iron oxide. Such composition provides a material density that is about three times the density of a standard plastic material used for toothbrushes, e.g. polypropylene. With the higher weight and higher thermal conductivity, the material drives value perception, in particular in combination with a galvanic coating. Such coating may be made from real metal. The galvanic coating can be applied in a selective electroplating process. During this coating process for a multicomponent plastic part, a metallic layer is only deposited on a hard material while a further over molded soft component may remain unaffected.

The magnetic and/or ferromagnetic material may comprise about 27.5 weight percent of an amorphous thermoplastic resin, about 17 weight percent of aluminum oxide, about 51 weight percent of iron oxide, and about 4.5% glass fiber.

The amorphous thermoplastic resin may comprise a styrene resin, e.g. styrene acrylonitrile "SAN". The amorphous thermoplastic resin may be selected from the list consisting of acrylonitrile butadiene styrene, polystyrene, and styrene acrylonitrile.

The amorphous thermoplastic resin may comprise about 17% weight percent styrene acrylonitrile, and 10.5 weight percent of a mixture comprising polybutylene terephthalate and polyethylene terephthalate.

Surprisingly, it has been found out that said composition provides a high gravity molding material appropriate for injection molding or extrusion molding. A high specific gravity molding material high in surface hardness, excellent in coating characteristics as well as excellent in thermal conductivity is provided.

The use of molding materials having a relatively high specific gravity is known. Such molding materials usually contain a polymeric resin and a high-density filler such as iron oxide. However, in such molding materials the amount of iron oxide which can be included is limited as the thermal conductivity properties of the molding material are relatively poor. Thus, on the one side, lower thermal conductivity leads to relatively longer cycle times during manufacturing to allow the molding material to cool after molding. On the other side, if heavy polymeric materials are filled with high heat conductive additives such as metal powder or fibers, the addition of these materials leads to tight process windows in molding because of the immediate freezing when the molten material contacts the cold wall of the tool. This fast freezing leads to high injection speed and low flow length to wall thickness ratio at the produced part.

Now, it has been surprisingly found out that the molding material according to the present disclosure has a high specific gravity and optimally controlled thermal conductivity properties to reduce or expand the time needed for the molding material to cool during or after injection molding. Surprisingly, it has been found out that a relatively high percentage of iron oxide can be maintained in the molding material while improving on the thermal conductivity properties of the molding material. The addition of aluminum oxide, boron nitride or aluminum silicate provides the molding material with improved thermal conductivity as compared to materials containing a styrene resin and iron oxide only. This improved thermal conductivity may lead to lower cycle times as the molding material needs less time to cool after molding.

Another benefit of adding aluminum oxide, boron nitride or aluminum silicate to the material is the ability to increase the overall amount of iron oxide in the molding material as compared with materials comprising iron oxide and resins of the past. The improvements in the molding material properties come from the addition of relatively small amounts of aluminum oxide, boron nitride or aluminum silicate. A material composition comprising a relatively high percentage of iron oxide (magnetite), i.e. from about 45 weight percent to about 67 weight percent, preferably about 51 weight percent, provides good magnetic properties and a relatively heavy weight of the overall material.

Styrene acrylonitrile "SAN" provides high thermal resistance properties. The acrylonitrile units in the chain enable SAN to have a glass transition temperature greater than 100°C. The properties of SAN may allow for reduced cycle time due to relatively earlier and quicker transition temperature. Amorphous polymers are suitable for heavy resin compounds of the present disclosure due to the glass transition temperature Tg at which an amorphous polymer is transformed, in a reversible way, from a viscous or rubbery condition to a hard one. By injection molding of the heavy resin material of the present disclosure the temperature of the material melt is above the Tg region (viscous or rubbery condition). During cooling the compound attains the high Tg temperature early and reaches dimensional stability (glassy condition). Over-molding of the heavy resin material is possible as the material stays dimensional stable due to the high Tg of the material.

Polybutylene terephthalate (PBT) and/or polyethylene terephthalate (PET) provide the handle with high quality surface properties, including improved optical characteristics, and high impact strength. Once heated, a mixture of PBT and PET represent a high temperature-resistant melt having low viscosity and a high Melt Flow Index (MFI). Therefore, processability of the magnetic/ferromagnetic material during molding is improved.

It is known, that heavy resin materials tend to show high shrinkage effects for products having thick walls/dimensions. However, it has been surprisingly found out that glass fibers added to the magentic/ferromagentic material provide the material composition with improved stability and low shrinkage effects.

A method for manufacturing an oral care implement according to the present disclosure comprises the following steps:
- providing an amorphous thermoplastic resin,
- providing aluminum oxide, boron nitride or aluminum silicate,
- providing iron oxide,
- mixing the amorphous thermoplastic resin, aluminum oxide, boron nitride or aluminum silicate and iron oxide into a magnetic and/or ferromagnetic molding material,
- heating the molding material mixture into a flowable molding material,
- molding the flowable molding mixture into a handle or part of a handle,
- providing a non-magnetic and/or non-ferromagnetic material, and
molding the non-magnetic and/or non-ferromagnetic material into a head or part of a head, wherein the amorphous thermoplastic resin is provided in a range from about 13 weight percent to about 30 weight percent, the aluminium oxide, boron nitride or aluminium silicate is provided in a range from about 3 weight percent to about 25 weight percent and the iron oxide is provided in a range from about 45 weight percent to about 67 weight percent.

The amorphous thermoplastic resin may comprise styrene acrylonitrile, polybutylene terephthalate and polyethylene terephthalate, wherein polybutylene terephthalate and polyethylene terephthalate may be premixed with glass fibers. The amorphous thermoplastic resin is provided in a range from about 13 weight percent to about 30 weight percent; the aluminum oxide, boron nitride or aluminum silicate is provided in a range from about 3 weight percent to about 25 weight percent; and the iron oxide is provided in a range from about 45 weight percent to about 67 weight percent.

The magnetic and/or ferromagnetic material may comprise about 17 weight percent of styrene acrylonitrile; about 10.5 weight percent of a composition comprising polybutylene terephthalate and polyethylene terephthalate; about 4.5 weight percent of glass fibers; about 17 weight percent of aluminum oxide; and about 51 weight percent of iron oxide.

The material composition may be made by blending the amorphous thermoplastic resin with powder of aluminum oxide, boron nitride or aluminum silicate, and with iron oxide powder. Increasing the amount of iron oxide within the material composition has further the advantage of providing a lower cost molding material because iron oxide powder is less expensive than the other filling agents. Amorphous thermoplastic resin, glass fibers, aluminum oxide/ boron nitride or aluminum silicate powder, and iron oxide powder may be blended by using a uniaxial extruder, a biaxial extruder, a kneader, a Banbury mixer, a roll or other such extruders. After blending the material is heated to become flowable. The flowable material may then be molded into a handle or part of a handle by either injection molding or extrusion molding.

In an additional step, the handle or part of the handle may be electroplated to add improved appearance and a pleasant feel. Thermoplastic elastomers are well suited for electroplating as they allow for the creation of both hard and soft composite components to be electroplated selectively in one operation.

For example, the handle may comprise a thumb rest being made from a thermoplastic elastomer material and/or from a polypropylene material. These materials can be easily injection molded over the heavy resin material as discussed above. Such thumb rest may provide the handle of the oral care implement with improved handling properties, e.g. with anti-slip properties to improve the maneuverability of the oral care implement under wet conditions, e.g. when the user brushes his teeth. The thumb rest may be made from thermoplastic elastomer having a Shore A hardness from about 30 to about 60, or about 40 to prevent the oral care implement from being too slippery when used in wet conditions. At least a portion of the thumb rest may have a concave shape with an angle α with respect to the area of the remaining portion of the thumb rest from about 20° to about 25°, or about 24°. The thumb rest or a gripping region may be attached onto the front surface of the handle in the region close to the proximal end, i.e. closest to the head. The thumb rest may comprise a plurality of ribs extending substantially perpendicular to the longitudinal axis of the oral care implement. Such ribs may allow users/consumers to use the oral care implement with even more control. The user/consumer can better grasp and manipulate the handle of the oral care implement during brushing. Such handle may provide further improved control and greater comfort during brushing, in particular under wet conditions.

Furthermore, the handle may be made from at least two, or at least three different materials, each forming different parts of the handle. For example, a first material according to the present disclosure, e.g. a magnetic and/or ferromagnetic material may be injection molded into a first component of the handle thereby forming an underlying base structure of the oral care implement. A second component, e.g. of polypropylene material may be injection molded over the first component, and/or a third component, e.g. of thermoplastic elastomer material may be injection molded over the first component and/or the second component.

The third component of thermoplastic elastomer material may form the thumb rest on the front surface of the oral care implement and/or a palm grip on the back surface being opposite the front surface to be gripped by the user's/consumer's fingers and thumb. Such handle configuration may even further resist slippage during use. The thermoplastic elastomer material may extend through an aperture provided in the underlying base structure and/or second component of the handle.

The tooth cleaning elements of the oral care implement, e.g. bundle of filaments forming one or a plurality of tufts, may be attached to the head by means of a hot tufting process. One method of manufacturing the head with tufts of filaments embedded in the head may comprise the following steps: In a first step, tufts are formed by providing a desired amount of filaments. In a second step, the tufts are placed into a mold cavity so that ends of the filaments which are supposed to be attached to the head extend into said cavity. The opposite ends of the filaments not extending into said cavity may be either end-rounded or non-end-rounded. For example, the filaments may be not end-rounded in case the filaments are tapered filaments having a pointed tip. In a third step the head is formed around the ends of the filaments extending into the mold cavity by an injection molding process, thereby anchoring the tufts in the head. Alternatively, the tufts may be anchored by forming a first part of the head - a so called "sealplate" - around the ends of the filaments extending into the mold cavity by an injection molding process before the remaining part of the oral care implement is formed. Before starting the injection molding process the ends of the tufts extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tufts on the finished head of the oral care implement. In other words, the tufts attached to the head by means of a hot tufting process are not doubled over a middle portion along their length and are not mounted in the head by using an anchor/staple. The tufts are mounted on the head by means of an anchor-free tufting process.

Alternatively, the head for the oral care implement may be provided with a bristle carrier having at least one tuft hole, e.g. a blind-end bore. A tuft comprising a plurality of filaments may be fixed/anchored in said tuft hole by a stapling process/anchor tufting method. This means, that the filaments of the tuft are bent/folded around an anchor, e.g. an anchor wire or anchor plate, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner.

The following is a non-limiting discussion of example embodiments of oral care implements and parts thereof in accordance with the present disclosure, where reference to the Figures is made.

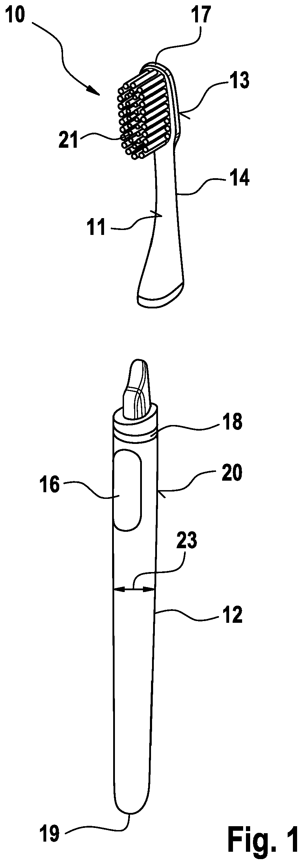

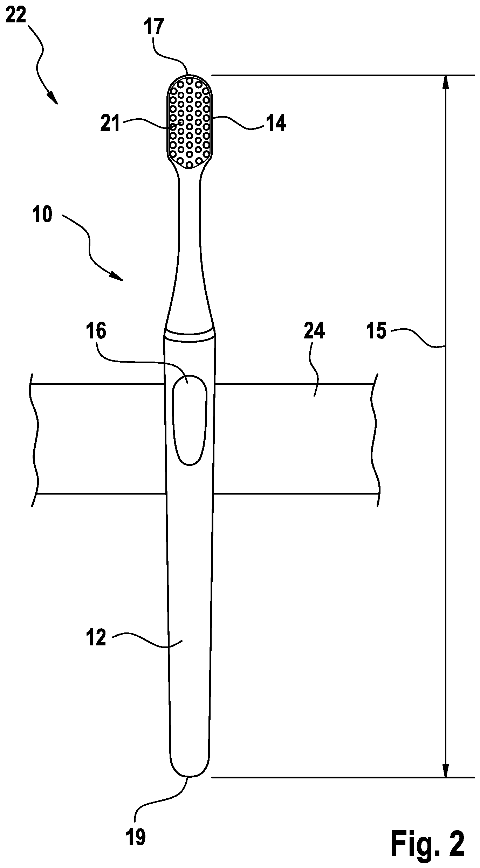

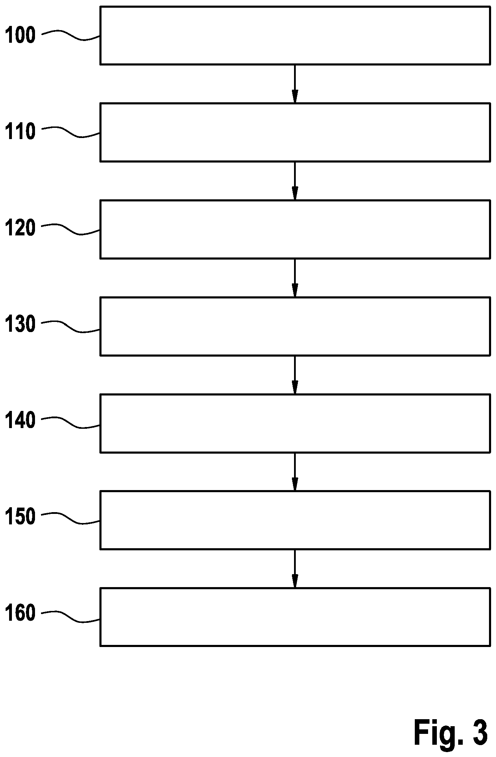

Fig. 1 shows an oral care implement 10, in this specific embodiment a manual toothbrush 10, the manual toothbrush 10 comprising a handle 12 and head 14 being repeatedly attachable to and detachable from the handle 12. The oral care implement 10 has a front side 11 and a back side 13. An overall length extension 15 extends between a proximal end 17 and a distal end 19 of the implement 10 (cf. Fig. 2). Tooth cleaning elements 21 are attached to the head 14 and extend from the front side 11. The handle 12 may be formed by using the process as shown in the flow chart of Fig. 3 and as further explained below. The handle 12 may be molded from a magnetic and/or ferromagnetic material. In addition, the handle 12 may have been undergone electroplating with any additional material, for example a polyethylene material or a thermoplastic elastomer to create a soft region, e.g. a thumb rest 16. The soft region/thumb rest 16 may improve comfort and feel of the handle 12. Alternatively, or in addition, by a further electroplating step the handle 12 may be provided with a metal layer 18 directly on the magnetic and/or ferromagnetic material of the present disclosure to further improve the appearance of the handle 12. For example, the metal layer 18 may have the form of a ring surrounding the outer circumference 20 of the handle 12.

The material of which the handle 12 is at least partially made possesses magnetic and/or ferromagnetic properties. Fig. 2 shows a kit 22 comprising a manual toothbrush 10 with handle 12 to which head 14 is attached, and a magnetic holder 24 onto which toothbrush 10 is magnetically attached.

Fig. 3 shows a diagram of a flow chart illustrating the steps of making a handle 12 or a portion of a handle of the oral care implement 10 according to the present disclosure. An amorphous thermoplastic resin, optionally comprising glass fibers, is provided at 100. Aluminum oxide, boron nitride or aluminum silicate is provided at 110. Iron oxide is provided at 120. At 130, the amorphous thermoplastic resin (optionally comprising glass fibers), the aluminum oxide, boron nitride or aluminum silicate, and the iron oxide are mixed into a molding material. The molding material is then heated into a flowable condition at 140. The heated and flowable molding material is molded into a handle 12 or part of a handle at 150. The molding step may be either an injection molding or extrusion molding step. The optional step of electroplating the oral care implement/handle is shown at 160.

The material according to the present disclosure is an alternative to metal/zinc-die-cast material. The material of the disclosure enables to offer an attractive solution with respect to the manufacturing process according to the present disclosure, price and environment. This alternative allows the handle to have the look and feel in the final state like a metal product. At the same time the material of the present disclosure should be easily processable by injection molding and should save on the assembly effort. For example, for the process of the present disclosure there are three basic steps required: (1) injection molding of the handle 12; (2) two-component injection molding of hard material and/or soft material, e.g. to form a thumb rest 16; and (3) electroplating of the handle, e.g. to form a metal layer in the form of a ring 18. In contrast, when using a zinc-die-cast material five steps are needed: (1) manufacturing of the zinc-die-casted main part; (2) deflashing of the main part; (3) electroplating the main part; (4) separately producing a soft material part; (5) and assembling the main part with the separately produced soft material part. A lubricant may be added to the material to improve the molding processing fluidity.

Table 1 shows the flowability and heat transfer results of several different formulas/material compositions:

**Table 1: Flowability and heat transfer**

| Test-No. | 20 % SAN 80 % Iron oxide | 20 % SAN 5% Aluminum oxide 75% Iron oxide | 15 % SAN 10% Aluminum oxide 75% Iron oxide | 17% SAN 16% Aluminum oxide 67 % Iron oxide |
|---|---|---|---|---|
| Specific weight [g/cm³] | 2.91 | 2.95 | 2.99 | 3.06 |
| 1 | 21 | 16 | 13 | 9 |
| 2 | 20 | 16 | 13 | 9 |
| 3 | 20 | 16 | 13 | 10 |
| 4 | 21 | 16 | 13 | 9 |
| 5 | 20 | 16 | 14 | 9 |
| 6 | 20 | 16 | 13 | 8 |
| 7 | 20 | 16 | 13 | 9 |
| 8 | 20 | 16 | 13 | 9 |
| 9 | 20 | 16 | 13 | 9 |
| 10 | 20 | 16 | 13 | 9 |
| **Average (cm)** | **20.2** | **16** | **13.1** | **9** |
| **Content Al-Ox [%]** | **0** | **5** | **10** | **16** |
| Heat transfer rate | 0.87 | 0.96 | 1.2 | 1.43 |
| [W/m*K] | 0.89 | 1.06 | 1.22 | 1.41 |
| | 0.88 | 1.01 | 1.23 | 1.44 |
| **Average Value [W/m*K]** | **0.88** | **1.01** | **1.21666667** | **1.42666667** |

Graph 1 plots the average results of heat transfer and flow distance of the formulas/material compositions from Table 1.

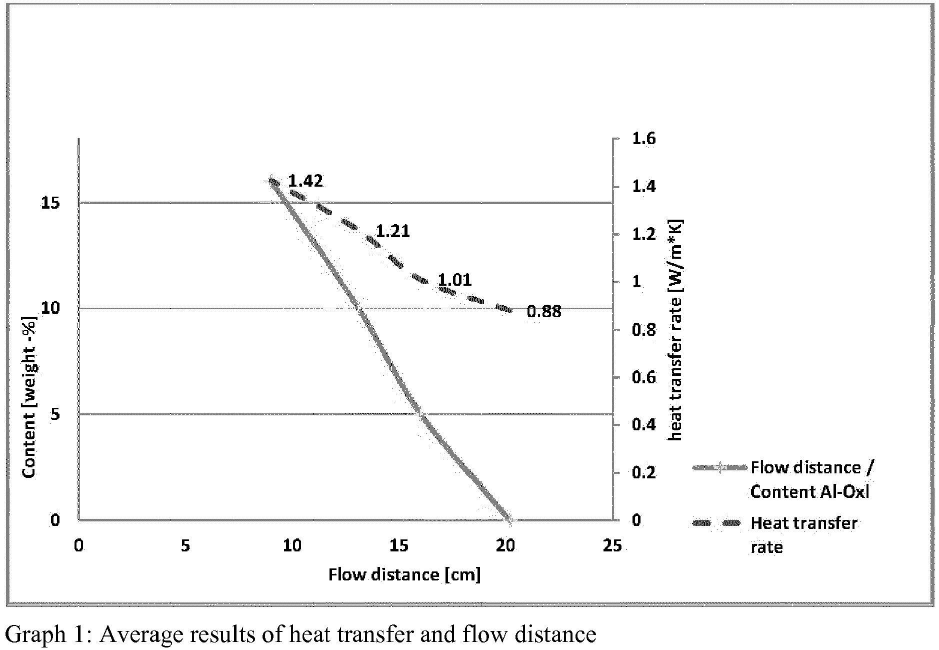

As can be seen, different fillers and different concentrations of fillers control the thermal conductivity or heat transmission and flowability of the material.

Test results revealed that the use of boron nitride or aluminum silicate showed very similar results to that of aluminum oxide depicted in Table 1 and Graph 1 above.

The heat energy and shear heating affect the fluidity of the heavy resin material, and thereby the process window for an effective injection molding process can be exactly controlled. Further, with the ability of the material of the present disclosure to fill any available cavities within the mold, it is possible to use the mass/weight distribution of the material for adaption of the inertial moment/center of gravity of the finished handle.

The material of the present disclosure provides several benefits: The handle manufactured with the material of the present disclosure looks and feels like a heavy metal handle and it is resistant to corrosion. The material also has manufacturing advantages and cost saving advantages with fast cycle times due to its heat transfer properties as compared to metal inserted or die-casted handles and products with assembled component parts. The material of the present disclosure requires less energy and other essential resources for manufacturing in comparison to zinc-die casted products.

In contrast to material compositions that are highly loaded with fillers, the magnetic/ferromagnetic material of the present disclosure shows optimized mechanical properties, in particular dimensional stability under heat and impact strength due to the improved melt viscosity and glass transition temperature.

The material of the present disclosure possesses the ability to adhere to other components/materials, e.g. substrates and resins, which is important for multicomponent injection molding, e.g. for molding handles comprising two or three different materials.

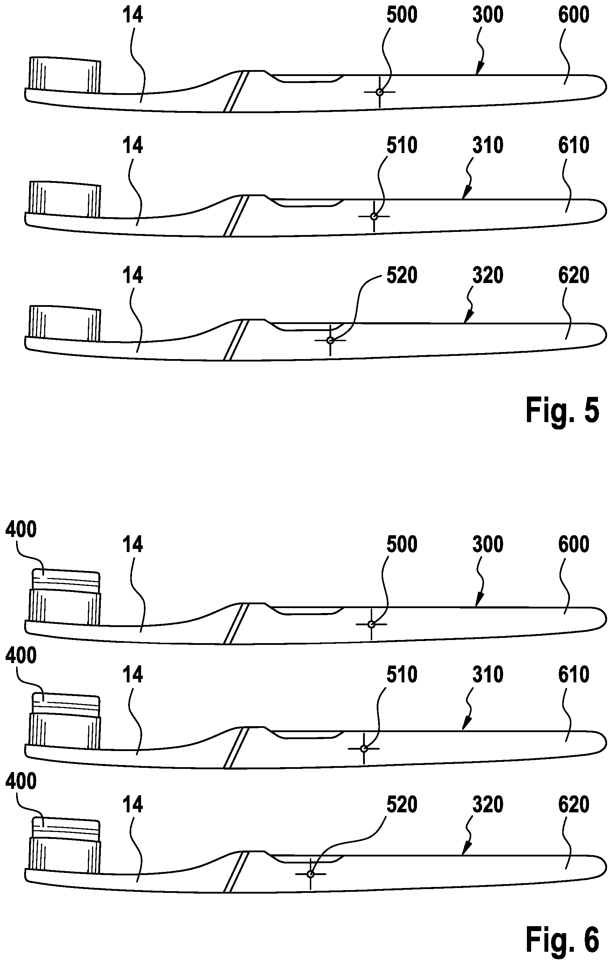

Fig. 4 shows five different grip styles / ways how users usually hold a toothbrush during tooth brushing: "Power Grip" 200, 210, "Oblique Grip" 220, 230, "Distal Oblique Grip" 240, 250, "Precision Grip" 260, 270 and "Spoon Grip" 280, 290. In the left column, the different grip styles 200, 220, 240, 260, 280 are shown when a user holds a toothbrush 320, 1000 according to the state of the art (cf. Figs. 5, 6, 7, 8 and 9), while in the right column the respective grip styles 210, 230, 250, 270, 290 are shown when a user holds an oral care implement 10, 300, 310 (cf. Figs. 5, 6, 7 and 10) according to the present disclosure. The center of gravity is indicated with "X". The grip styles can be defined by the following characteristics:

"Power Grip" 200, 210: Infrequently used; fingers wrap tightly around the handle; the thumb is mostly extended or wraps tightly around the handle; used by consumers thinking "more pressure cleans better", or as one of multiple changing styles during brushing for areas where consumers need better control, e.g. at the back molars or inner tooth surfaces. Some consumers are holding the handle at the lower end in order to reduce pressure. Also used by most kids when they start brushing on their own.

"Oblique Grp" 220, 230: Very often used; handle weight is loosely placed in the palm; thumb is extended relative to the forefinger; allows good grip and navigation similar to cutting with a knife. Most often used for brushing as this is a common style applied for several occasions during a day, e.g. eating, hair combing, brush sweeping. In most cases consumers using this style are applying the scrubbing technique (i.e. a forth and back movement) to clean their teeth.

"Distal Oblique Grip" 240, 250: Very often used; handle weight is loosely placed in the palm; thumb and ring finger oppose each other; allows good grip and navigation similar to cutting with a knife. Also often used for brushing as this is a common style applied for several occasions during a day, e.g. eating, hair combing, brush sweeping. In most cases consumers using this style are applying the scrubbing technique (i.e. a forth and back movement) to clean their teeth.

"Precision Grip" 260, 270: Infrequently used; weight of the handle mainly on fingertips; thumb and forefinger oppose each other; as this is a non-pressure style it is often used for hard to reach or sensitive areas, e.g. at the inner tooth surfaces. Often observed as transition grip to "Distal oblique" or "Oblique", but some consumers use it as their "only grip style".

"Spoon Grip" 280, 290: Frequently used in chopstick regions; forefinger and thumb oppose each other thereby holding the handle tightly. Based on consumer habits, i.e. "Chopstick" style is very common in Asia; very familiar as it is often used for other occasions; used similar to the "Precision" style as the gentle way to clean hard to reach or sensitive areas.

As derivable from Fig. 4, the center of gravity X of the toothbrush according to the present disclosure is shifted closer to the center of the length extension of the toothbrush handle as compared to the toothbrush according to the state of the art, even if the toothbrush head is loaded with toothpaste. Since the center of gravity is close to the center of the length extension of the handle, the toothbrush is better balanced and does not easily tip over / does not get head loaded once paste is applied onto the brush head. Further, as shown in Fig. 4, in all different grip styles the center of gravity is in or very close to the pivot point of the wrist joint. A balanced toothbrush is easier to control in the mouth and allows precise and accurate brushing movements, thereby enabling better cleaning of the teeth.

Fig. 5 shows three toothbrushes 300, 310, 320 which are identical except from the handle material 600, 610, 620. Fig. 6 shows the toothbrushes 300, 310, 320 of Fig. 5, but loaded with toothpaste 400. Material compositions and characteristics of toothbrushes 300, 310, 320 are listed in Table 2:

**Table 2: Material compositions and characteristics**

| Fig. | Brush | Total mass [g] | Head material/density [g/cm³] | Handle material | handle material density [g/cm³] |
|---|---|---|---|---|---|
| 5 | 300 | 48.7 | Polypropylene/0.9 | 15 wt% styrene acrylonitrile 10 wt% aluminum oxide 75 wt% iron oxide Or alternatively: 17 wt% styrene acrylonitrile 16 wt% aluminum oxide 67 wt% iron oxide | 3.0 |
| 6 | 300 | 50.2 | Polypropylene/0.9 | 15 wt% styrene acrylonitrile 10 wt% aluminum oxide 75 wt% iron oxide Or alternatively: 17 wt% styrene acrylonitrile 16 wt% aluminum oxide 67 wt% iron oxide | 3.0 |
| 5 | 310 | 41.7 | Polypropylene/0.9 | 17 wt% styrene acrylonitrile 10.5 wt% BPT and PET 4.5% glass fiber 17 wt% aluminum oxide 51 wt% iron oxide | 2.5 |
| 6 | 310 | 43.2 | Polypropylene/0.9 | 17 wt% styrene acrylonitrile 10.5 wt% BPT and PET 4.5% glass fiber 17 wt% aluminum oxide 51 wt% iron oxide | 2.5 |
| 5 | 320 | 19.3 | Polypropylene/0.9 | Polypropylene | 0.9 |
| 6 | 320 | 20.7 | Polypropylene/0.9 | Polypropylene | 0.9 |

The center of gravity of toothbrushes 300, 310, 320 are indicated with 500, 510, 520, respectively. As shown in Figs. 5 and 6, center of gravity 500 of brush 300, and center of gravity 510 of brush 310 (according to the present disclosure) are closer to the center of the length extension of the toothbrush handle as compared to center of gravity 520 of brush 320 (according to the state of the art). Toothbrushes 300 and 310 are easier to control in the mouth and allow more precise and accurate brushing movements.

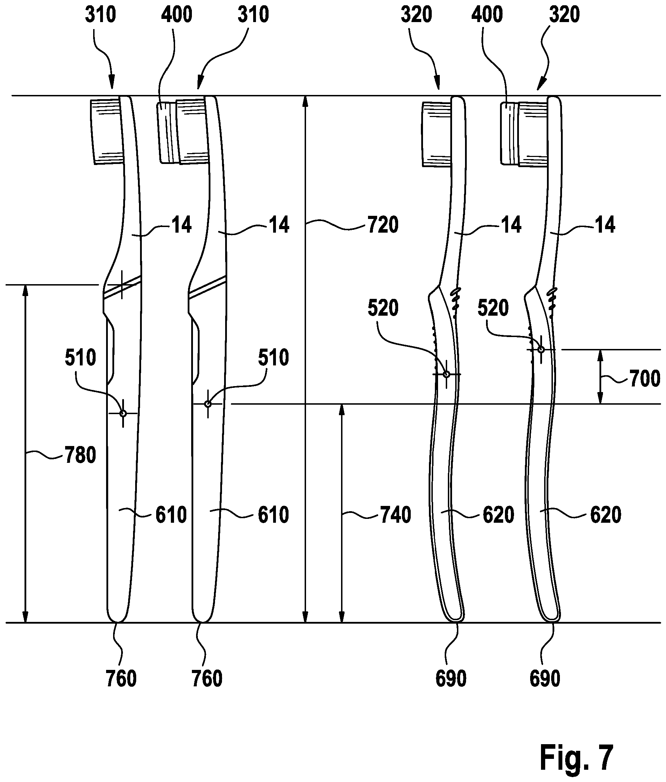

In Fig. 7 toothbrush 310 (without and with toothpaste) is compared with toothbrush 320 (with and without toothpaste). As clearly derivable from Fig. 7, the center of gravity 510 is closer to the center of the length extension of the handle than the center of gravity 520 of toothbrush 320. The center of gravity 510 of toothbrush 310 is shifted by distance 700.

Further, as shown in Fig. 7, toothbrush 310 has an overall length extension 720. The center of gravity 510 is located at distance 740 measured from the distal end 760 of the handle 610. The ratio of the distance 740 of the center of gravity 510 measured from the distal end 760 to the overall length extension 720 of the oral care implement 310 is from about 0.30 to about 0.45, or from about 0.35 to about 0.42, or from about 0.38 to about 0.41. Such ratio provides a toothbrush having a center of gravity being close to the pivot point of the wrist joint during brushing. When using the grip styles shown in Fig. 4, the toothbrush is easier to control in the mouth, thereby allowing more precise and accurate brushing movements.

The overall length extension 720 of the oral care implement 310 may be from about 180 mm to about 220 mm, or about 200 mm, while the handle 610 of said oral care implement 310 may have a length extension 780 from about 120 mm to about 140 mm, or about from 125 mm to about 131 mm, or about 130 mm. The center of gravity 510 (when the oral care implement 310 is loaded with 1.4 g toothpaste) is located at about 83 mm, measured from the distal end 760 of handle 610.

In contrast to toothbrush 310, toothbrush 320 (according to the state of the art) has a center of gravity 520 located at a distance of about 194 mm measured from the distal end 690 (when toothbrush 320 is loaded with about 1.4 g toothpaste). The center of gravity 510 of toothbrush 310 is shifted towards the distal end 760 of handle 610 by 111 mm (in comparison to toothbrush 320).

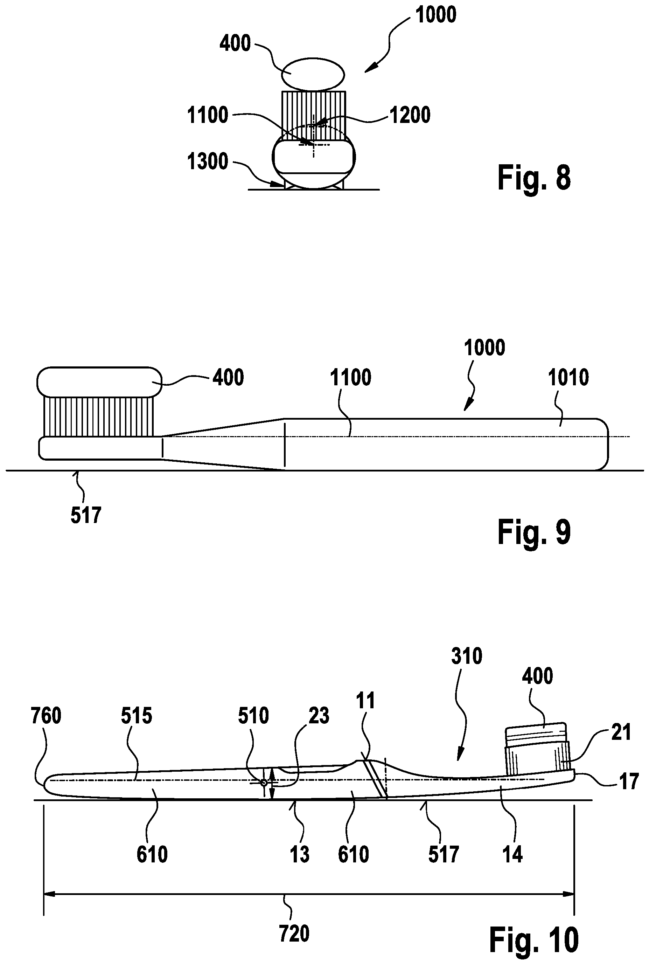

Figs. 8 and 9 show in a front view and side view, respectively, axis of rotation 1100 and center of gravity 1200 of toothbrush 1000 according to the state of the art. Toothbrush 1000 comprises a handle 1010 made of polypropylene having a density of about 0.9 g/cm³. Toothbrush 1000 is loaded with about 1.4 g of toothpaste and placed on a substantially planar/flat surface 517. As derivable from Fig. 8, the center of gravity 1200 is above the axis of rotation 1100, and, thus, toothbrush 100 is in an instable/unbalanced position. To prevent the toothbrush 1000 from tipping/rotating to the side if the brush 1000 is moved out of the balanced position, additional geometrical structures in the form of roll stops 1300 are provided.

In contrast to the toothbrushes of the state of the art having a lightweight handle, toothbrush 310 according to the present disclosure has a center of gravity 510 being located below the axis of rotation 515 when the brush is loaded with about 1.4 g of toothpaste and placed on a substantially planer/flat surface 517 (cf. Fig. 10). As the center of gravity 510 is closer to the back side 13 than to the front side 11 of toothbrush 310 when measured along the height extension 23 of handle 610, toothbrush 310 returns automatically to an upright positon (as shown in Fig. 10) and keeps toothpaste 400 away from the surface 517 once the brush 310 is moved out of the balanced position.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An oral care implement (10, 300, 310) having an overall length extension (15, 720) extending between a proximal end (17) and a distal end (19, 760), the distal end (19, 760) being opposite the proximal end (17), the oral care implement (10, 300, 310) comprising a head (14) at the proximal end (17) and a handle (12, 600, 610), the handle (12, 600, 610) being at least partially made from a material having a density being higher than the density of the material of the head (14), the oral care implement (10, 300, 310) having a center of gravity (500, 510) located at a distance (740) measured from the distal end (19, 760), wherein the ratio of said distance (740) to the overall length extension (15, 720) of the oral care implement (10, 300, 310) is from about 0.30 to about 0.45, preferably from about 0.35 to about 0.42, further preferably from about 0.38 to about 0.41, **characterized in that**
the material of the handle (12, 600 , 610) comprises a magnetic and/or ferromagnetic material comprising from about 13 weight percent to about 30 weight percent of an amorphous thermoplastic resin; from about 3 weight percent to about 25 weight percent of aluminium oxide, boron nitride or aluminium silicate; and from about 45 weight percent to about 67 weight percent of iron oxide.

2. The oral care implement (10, 300, 310) of claim 1, wherein the overall length extension (15, 720) of the oral care implement (10, 300, 310) is from about 180 mm to about 220 mm, preferably about 200 mm.

3. The oral care implement (10, 300, 310) of any of the preceding claims, wherein the oral care implement (10, 300, 310) has a front side (11) and a back side (13) opposite the front side (11), and the head (14) has at least one cleaning element (21) extending from the front side (11), and the handle (12, 600, 610) has a cross-sectional area extending substantially perpendicular to the overall length extension (15, 720) of the oral care implement (10, 300, 310), the cross-sectional area has a height extension (23) extending between the front side (11) and the back side (13), and the oral care implement (10, 300, 310) has an axis of rotation (515) when the oral care implement (10, 300, 310) is placed with the back side (13) on a surface (517), and the center of gravity (500, 510) is below the axis of rotation (515) and closer to the back side (13) than to the front side (11) when measured along the height extension (23) of the handle (12, 600, 610).

4. The oral care implement (10, 300, 310) of any of the preceding claims, wherein the head (14) is at least partially made from a material having a density from about 0.5 g/cm³ to about 1.2 g/cm³, preferably from about 0.7 g/cm³ to about 1.0 g/cm³, further preferably about 0.9 g/cm³, and/or the handle (12, 600, 610) is at least partially made from a material having a density from about 2.1 g/cm³ to about 3.1 g/cm³, preferably from about 2.3 g/cm³ to about 2.8 g/cm³, further preferably from about 2.5 g/cm³ to about 2.7 g/cm³.

5. The oral care implement (10, 300, 310) of any of the preceding claims, wherein the material of the head (14) is a non-magnetic and/or non-ferromagnetic material, preferably polypropylene..

6. The oral care implement (10, 300, 310) of any of the preceding claims, wherein the amorphous thermoplastic resin is selected from the group consisting of: acrylonitrile butadiene styrene, polystyrene, and styrene acrylonitrile.

7. The oral care implement (10, 300, 310) according to any of the preceding claims, wherein the magnetic and/or ferromagnetic material comprises about 27.5 weight percent of an amorphous thermoplastic resin, about 17 weight percent of aluminium oxide, about 51 weight percent of iron oxide, and about 4.5% glass fiber.

8. The oral care implement (10, 300, 310) of any of the preceding claims, wherein the amorphous thermoplastic resin comprises about 17% weight percent styrene acrylonitrile, and 10.5 weight percent of a blend comprising polybutylene terephthalate and polyethylene terephthalate.

9. A kit (22) comprising the oral care implement (10, 300, 310) of any of the preceding claims and a magnetic holder (24) for attaching and holding the oral care implement (10, 300, 310).

10. A method for manufacturing an oral care implement (10, 300, 310) according to any of claims 1 to 8, the method comprising the following steps:
- providing an amorphous thermoplastic resin,
- providing aluminium oxide, boron nitride or aluminium silicate,
- providing iron oxide,
- mixing the amorphous thermoplastic resin, aluminium oxide, boron nitride or aluminium silicate and iron oxide into a magnetic and/or ferromagnetic molding material,
- heating the molding material mixture into a flowable molding material,
- molding the flowable molding mixture into a handle (12, 600, 610) or part of a handle (12, 600, 610),
- providing a non-magnetic and/or non-ferromagnetic material, and
- molding the non-magnetic and/or non-ferromagnetic material into a head (14) or part of a head (14), wherein the amorphous thermoplastic resin is provided in a range from about 13 weight percent to about 30 weight percent, the aluminium oxide, boron nitride or aluminium silicate is provided in a range from about 3 weight percent to about 25 weight percent and the iron oxide is provided in a range from about 45 weight percent to about 67 weight percent.

11. The method of claim 10, wherein the amorphous thermoplastic resin comprises styrene acrylonitrile, polybutylene terephthalate and/or polyethylene terephthalate.

12. The method of claim 10 or 11, wherein at least a portion of the amorphous thermoplastic resin is blended with glass fiber.

13. The method of any of claims 10 to 12, the method comprising the additional step of: electroplating the handle (12, 600, 610) with a thermoplastic elastomer or a polypropylene material.

## Patentansprüche

1. Mundpflege-Hilfsvorrichtung (10, 300, 310) mit einer Gesamtlängenausdehnung (15, 720), die sich zwischen einem proximalen Ende (17) und einem distalen Ende (19, 760) erstreckt, wobei das distale Ende (19, 760) entfernt von dem proximalen Ende (17) gelegen ist, wobei die Mundpflege-Hilfsvorrichtung (10, 300, 310) ein Kopfstück (14) am proximalen Ende (17) und einen Griff (12, 600, 610) umfasst, wobei der Griff (12, 600, 610) mindestens teilweise aus einem Material hergestellt ist, das eine Dichte aufweist, die höher als die Dichte des Materials des Kopfstücks (14) ist, wobei die Mundpflege-Hilfsvorrichtung (10, 300, 310) einen Schwerpunkt (500, 510) aufweist, der in einem Abstand (740), gemessen vom distalen Ende (19, 760), angeordnet ist, wobei das Verhältnis des Abstands (740) zur Gesamtlängenausdehnung (15, 720) der Mundpflege-Hilfsvorrichtung (10, 300, 310) von etwa 0,30 bis etwa 0,45, vorzugsweise von etwa 0,35 bis etwa 0,42, ferner vorzugsweise von etwa 0,38 bis etwa 0,41 beträgt, **dadurch gekennzeichnet, dass** das Material des Griffs (12, 600, 610) ein magnetisches und/oder ferromagnetisches Material umfasst, das von etwa 13 Gewichtsprozent bis etwa 30 Gewichtsprozent eines amorphen thermoplastischen Harzes; von etwa 3 Gewichtsprozent bis etwa 25 Gewichtsprozent Aluminiumoxid, Bornitrid oder Aluminiumsilikat; und von etwa 45 Gewichtsprozent bis etwa 67 Gewichtsprozent Eisenoxid umfasst.

2. Mundpflege-Hilfsvorrichtung (10, 300, 310) nach Anspruch 1, wobei die Gesamtlängenausdehnung (15, 720) der Mundpflege-Hilfsvorrichtung (10, 300, 310) von etwa 180 mm bis etwa 220 mm, vorzugsweise etwa 200 mm beträgt.

3. Mundpflege-Hilfsvorrichtung (10, 300, 310) nach einem der vorstehenden Ansprüche, wobei die Mundpflege-Hilfsvorrichtung (10, 300, 310) eine Vorderseite (11) und eine von der Vorderseite (11) entfernt gelegene Rückseite (13) aufweist und das Kopfstück (14) mindestens ein sich von der Vorderseite (11) erstreckendes Reinigungselement (21) aufweist und der Griff (12, 600, 610) eine Querschnittsfläche aufweist, die sich im Wesentlichen senkrecht zur Gesamtlängenausdehnung (15, 720) der Mundpflege-Hilfsvorrichtung (10, 300, 310) erstreckt, wobei die Querschnittsfläche eine Höhenausdehnung (23) aufweist, die sich zwischen der Vorderseite (11) und der Rückseite (13) erstreckt, und die Mundpflege-Hilfsvorrichtung (10, 300, 310) eine Drehachse (515) aufweist, wenn die Mundpflege-Hilfsvorrichtung (10, 300, 310) mit der Rückseite (13) auf einer Fläche (517) platziert wird, und sich der Schwerpunkt (500, 510) unter der Drehachse (515) und näher zur Rückseite (13) als zur Vorderseite (11) befindet, wenn entlang der Höhenausdehnung (23) des Griffs (12, 600, 610) gemessen.

4. Mundpflege-Hilfsvorrichtung (10, 300, 310) nach einem der vorstehenden Ansprüche, wobei das Kopfstück (14) mindestens teilweise aus einem Material mit einer Dichte von etwa 0,5 g/cm³ bis etwa 1,2 g/cm³, vorzugsweise von etwa 0,7 g/cm³ bis etwa 1,0 g/cm³, ferner vorzugsweise etwa 0,9 g/cm³ hergestellt ist, und/oder der Griff (12, 600, 610) mindestens teilweise aus einem Material mit einer Dichte von etwa 2,1 g/cm³ bis etwa 3,1 g/cm³, vorzugsweise von etwa 2,3 g/cm³ bis etwa 2,8 g/cm³, ferner vorzugsweise von etwa 2,5 g/cm³ bis etwa 2,7 g/cm³ hergestellt ist.

5. Mundpflege-Hilfsvorrichtung (10, 300, 310) nach einem der vorstehenden Ansprüche, wobei das Material des Kopfstücks (14) ein nichtmagnetisches und/oder nicht ferromagnetisches Material, vorzugsweise Polypropylen, ist.

6. Mundpflege-Hilfsvorrichtung (10, 300, 310) nach einem der vorstehenden Ansprüche, wobei das amorphe thermoplastische Harz ausgewählt ist aus der Gruppe bestehend aus: Acrylnitril-Butadienstyrol, Polystyrol und Styrol-Acrylnitril.

7. Mundpflege-Hilfsvorrichtung (10, 300, 310) nach einem der vorstehenden Ansprüche, wobei das magnetische und/oder ferromagnetische Material etwa 27,5 Gewichtsprozent eines amorphen thermoplastischen Harzes, etwa 17 Gewichtsprozent Aluminiumoxid, etwa 51 Gewichtsprozent Eisenoxid und etwa 4,5 % Glasfaser umfasst.

8. Mundpflege-Hilfsvorrichtung (10, 300, 310) nach einem der vorstehenden Ansprüche, wobei das amorphe thermoplastische Harz etwa 17 Gewichtsprozent Styrol-Acrylnitril und 10,5 Gewichtsprozent einer Mischung, umfassend Polybutylen-Terephthalat und Polyethylen-Terephthalat, umfasst.

9. Kit (22), umfassend die Mundpflege-Hilfsvorrichtung (10, 300, 310) nach einem der vorstehenden Ansprüche und eine magnetische Halterung (24) zum Anbringen und Halten der Mundpflege-Hilfsvorrichtung (10, 300, 310).

10. Verfahren zum Herstellen einer Mundpflege-Hilfsvorrichtung (10, 300, 310) nach einem der Ansprüche 1 bis 8, wobei das Verfahren die folgenden Schritte umfasst:
- Bereitstellen eines amorphen thermoplastischen Harzes,
- Bereitstellen von Aluminiumoxid, Bornitrid oder Aluminiumsilikat,
- Bereitstellen von Eisenoxid,
- Mischen von dem amorphen thermoplastischen Harz, Aluminiumoxid, Bornitrid oder Aluminiumsilikat und Eisenoxid in eine magnetische und/oder ferromagnetische Formmasse,
- Erwärmen des Formmassegemischs in eine fließfähige Formmasse,
- Formen des fließfähigen Formgemischs in einen Griff (12, 600, 610) oder Teil eines Griffs (12, 600 610),
- Bereitstellen eines nicht magnetischen und/oder nicht ferromagnetischem Materials, und
- Formen des nicht magnetischen und/oder nicht ferromagnetischen Materials in ein Kopfstück (14) oder Teil eines Kopfstücks (14), wobei das amorphe thermoplastische Harz in einem Bereich von etwa 13 Gewichtsprozent bis etwa 30 Gewichtsprozent, das Aluminiumoxid-Bornitrid oder Aluminiumsilikat in einem Bereich von etwa 3 Gewichtsprozent bis etwa 25 Gewichtsprozent und das Eisenoxid in einem Bereich von etwa 45 Gewichtsprozent bis etwa 67 Gewichtsprozent bereitgestellt wird.

11. Verfahren nach Anspruch 10, wobei das amorphe thermoplastische Harz Styrol-Acrylnitril, Polybutylen-Terephthalat und/oder Polyethylen-Terephthalat umfasst.

12. Verfahren nach Anspruch 10 oder 11, wobei zumindest ein Teil des amorphen thermoplastischen Harzes mit Glasfaser vermischt wird.

13. Verfahren nach einem der Ansprüche 10 bis 12, wobei das Verfahren den folgenden zusätzlichen Schritt umfasst: Elektroplattieren des Griffs (12, 600, 610) mit einem Thermoplastelastomer oder einem Polypropylenmaterial.

## Revendications

1. Instrument bucco-dentaire (10, 300, 310) ayant une étendue en longueur totale (15, 720) s'étendant entre une extrémité proximale (17) et une extrémité distale (19, 760), l'extrémité distale (19, 760) étant opposée à l'extrémité proximale (17), l'instrument bucco-dentaire (10, 300, 310) comprenant une tête (14) au niveau de l'extrémité proximale (17) et un manche (12, 600, 610), le manche (12, 600, 610) étant au moins partiellement fabriqué à partir d'un matériau ayant une masse volumique étant supérieure à la masse volumique du matériau de la tête (14), l'instrument bucco-dentaire (10, 300, 310) ayant un centre de gravité (500, 510) situé à une distance (740) mesurée à partir de l'extrémité distale (19, 760), dans lequel le rapport de ladite distance (740) à la l'étendue en longueur totale (15, 720) de l'instrument bucco-dentaire (10, 300, 310) est d'environ 0,30 à environ 0,45, de préférence d'environ 0,35 à environ 0,42, encore plus préférablement d'environ 0,38 à environ 0,41, **caractérisé en ce que** le matériau du manche (12, 600, 610) comprend un matériau magnétique et/ou ferromagnétique comprenant d'environ 13 pour cent en poids à environ 30 pour cent en poids d'une résine thermoplastique amorphe ; d'environ 3 pour cent en poids à environ 25 pour cent en poids d'oxyde d'aluminium, de nitrure de bore ou de silicate d'aluminium ; et d'environ 45 pour cent en poids à environ 67 pour cent en poids d'oxyde de fer.

2. Instrument bucco-dentaire (10, 300, 310) selon la revendication 1, dans lequel l'étendue en longueur totale (15, 720) de l'instrument bucco-dentaire (10, 300, 310) est d'environ 180 mm à environ 220 mm, de préférence d'environ 200 mm.

3. Instrument bucco-dentaire (10, 300, 310) selon l'une quelconque des revendications précédentes, dans lequel l'instrument bucco-dentaire (10, 300, 310) a un côté avant (11) et un côté arrière (13) opposé au côté avant (11), et la tête (14) a au moins un élément de nettoyage (21) s'étendant à partir du côté avant (11), et le manche (12, 600, 610) a une aire en coupe transversale s'étendant sensiblement perpendiculairement à l'étendue en longueur totale (15, 720) de l'instrument bucco-dentaire (10, 300, 310), l'aire en coupe transversale a une étendue en hauteur (23) s'étendant entre le côté avant (11) et le côté arrière (13), et l'instrument bucco-dentaire (10, 300, 310) a un axe de rotation (515) lorsque l'instrument bucco-dentaire (10, 300, 310) est placé avec le côté arrière (13) sur une surface (517), et le centre de gravité (500, 510) est sous l'axe de rotation (515) et plus proche du côté arrière (13) que du côté avant (11) lorsqu'il est mesuré le long de l'étendue en hauteur (23) du manche (12, 600, 610).

4. Instrument bucco-dentaire (10, 300, 310) selon l'une quelconque des revendications précédentes, dans lequel la tête (14) est au moins partiellement fabriquée à partir d'un matériau ayant une masse volumique d'environ 0,5 g/cm³ à environ 1,2 g/cm³, de préférence d'environ 0,7 g/cm³ à environ 1,0 g/cm³, encore plus préférablement d'environ 0,9 g/cm³, et/ou le manche (12, 600, 610) est au moins partiellement fabriqué à partir d'un matériau ayant une masse volumique d'environ 2,1 g/cm³ à environ 3,1 g/cm³, de préférence d'environ 2,3 g/cm³ à environ 2,8 g/cm³, encore plus préférablement d'environ 2,5 g/cm³ à environ 2,7 g/cm³.

5. Instrument bucco-dentaire (10, 300, 310) selon l'une quelconque des revendications précédentes, dans lequel le matériau de la tête (14) est un matériau non magnétique et/ou non ferromagnétique, de préférence du polypropylène.

6. Instrument bucco-dentaire (10, 300, 310) selon l'une quelconque des revendications précédentes, dans lequel la résine thermoplastique amorphe est choisie dans le groupe constitué : d'acrylonitrile butadiène styrène, de polystyrène, et d'acrylonitrile styrène.

7. Instrument bucco-dentaire (10, 300, 310) selon l'une quelconque des revendications précédentes, dans lequel le matériau magnétique et/ou ferromagnétique comprend environ 27,5 pour cent en poids d'une résine thermoplastique amorphe, environ 17 pour cent en poids d'oxyde d'aluminium, environ 51 pour cent en poids d'oxyde de fer, et environ 4,5 % de fibre de verre.

8. Instrument bucco-dentaire (10, 300, 310) selon l'une quelconque des revendications précédentes, dans lequel la résine thermoplastique amorphe comprend environ 17 % en poids d'acrylonitrile styrène, et 10,5 pour cent en poids d'un mélange comprenant du polytéréphtalate de butylène et du polytéréphtalate d'éthylène.

9. Trousse (22) comprenant l'instrument bucco-dentaire (10, 300, 310) selon l'une quelconque des revendications précédentes et un support magnétique (24) pour fixer et maintenir l'instrument bucco-dentaire (10, 300, 310).

10. Procédé de fabrication d'un instrument bucco-dentaire (10, 300, 310) selon l'une quelconque des revendications 1 à 8, le procédé comprenant les étapes suivantes :
- la fourniture d'une résine thermoplastique amorphe,
- la fourniture d'oxyde d'aluminium, de nitrure de bore ou de silicate d'aluminium,
- la fourniture d'oxyde de fer,
- le mélange de la résine thermoplastique amorphe, de l'oxyde d'aluminium, du nitrure de bore ou du silicate d'aluminium et de l'oxyde de fer en un matériau de moulage magnétique et/ou ferromagnétique,
- le chauffage du mélange de matériau de moulage pour obtenir un matériau de moulage qui peut s'écouler,
- le moulage du mélange de moulage qui peut s'écouler en un manche (12, 600, 610) ou une partie d'un manche (12, 600, 610),
- la fourniture d'un matériau non magnétique et/ou non ferromagnétique, et
- le moulage du matériau non magnétique et/ou non ferromagnétique en une tête (14) ou une partie d'une tête (14), dans lequel la résine thermoplastique amorphe est fournie dans une plage d'environ 13 pour cent en poids à environ 30 pour cent en poids, l'oxyde d'aluminium le nitrure de bore ou le silicate d'aluminium est fourni dans une plage d'environ 3 pour cent en poids à environ 25 pour cent en poids et l'oxyde de fer est fourni dans une plage d'environ 45 pour cent en poids à environ 67 pour cent en poids.

11. Procédé selon la revendication 10, dans lequel la résine thermoplastique amorphe comprend de l'acrylonitrile styrène, du polytéréphtalate de butylène et/ou du polytéréphtalate d'éthylène.

12. Procédé selon la revendication 10 ou 11, dans lequel au moins une partie de la résine thermoplastique amorphe est mélangée avec de la fibre de verre.

13. Procédé selon l'une quelconque des revendications 10 à 12, le procédé comprenant l'étape supplémentaire de : dépôt électrolytique du manche (12, 600, 610) avec un élastomère thermoplastique ou un matériau polypropylène.
